# EUROPÄISCHE PATENTANMELDUNG

(11) **EP 2 548 658 A1**
(43) Veröffentlichungstag der Anmeldung: **23.01.2013**
(21) Anmeldenummer: 11005999.5
(22) Anmeldetag: 21.07.2011
(51) Int. Cl.: B05D 3/14, B41M 3/14, B05D 5/06, B42D 15/00, G03G 19/00

(54) **Magnetisches Druckverfahren und Vorrichtung zur Durchführung desselben**

(71) Anmelder: Pago Etikettiersysteme GmbH, 72631 Aichtal (DE)
(72) Erfinder: Haid, Marcus, 72631 Aichtal (DE); Simsek, Metin, 72622 Nürtingen (DE); Heilemann, Dieter, 70794 Filderstadt (DE); Gelpke, Sven, 70794 Filderstadt (DE)
(74) Vertreter: Riebling, Peter

(57) **Zusammenfassung**

Magnetisches Druckverfahren zur Bilderzeugung auf einem Bedruckstoff mit einer Magnetdruckfarbe, die in einem Druckwerk aufgebracht ist und auf den Bedruckstoff übertragen wird, dadurch gekennzeichnet, dass in einem ersten Verfahrensschritt die Magnetdruckfarbe auf den Bedruckstoff aufgebracht wird, dass in einem zweiten Verfahrensschritt die auf dem Bedruckstoff haftende Magnetdruckfarbe in den Bereich einer Magnetisierungsstation gebracht wird, in welcher durch Eindringen von magnetischen Feldlinien, die in der Magnetdruckfarbe vorher regellos vorhandenen magnetisch ausrichtbaren Pigmente sich entsprechend den Feldlinien in der Magnetisierungsstation ausrichten und in einem dritten Verfahrensschritt der nun das Druckbild tragende Bedruckstoff nachfolgend einer Fixierstation zugeführt wird, in der die Magnetdruckfarbe fixiert wird, so dass die im Magnetfeld ausgerichtete Stellung der magnetisch ausrichtbaren Pigmente fixiert ist.

## Beschreibung

Die Erfindung betrifft ein magnetisches Druckverfahren und eine Vorrichtung zur Ausführung des Verfahrens nach dem Oberbegriff des Patenanspruches 1.

Ein magnetisches Druckverfahren nach dem Oberbegriff des Patentanspruches 1 ist beispielsweise mit dem Gegenstand der US 2,841,461 A, der US 3,161,544 A oder der DE 1256931 B bekannt geworden.

Alle bekannten magnetischen Druckverfahren zeichnen sich dadurch aus, dass zunächst eine magnetisierbare Trommel mit einer entsprechenden Motivstruktur magnetisiert wird, dass dann anschließend die mit der Motivstruktur magnetisierte Trommel aus einem Behälter magnetisierbare Farbpigmente aufnimmt, die an der Trommel haften bleiben, wonach dann die Trommel mit entsprechend der Motivstruktur anhaftenden Farbpigmenten bedeckt ist und die so beschichtete Trommel das so latent vorhandene Druckbild auf einen Bedruckstoff überträgt.

Ein derartiges magnetisches Drucken hat sich in großem Umfang bewährt, jedoch besteht der Nachteil, dass das Magnetisieren der Trommel, das Übertragen der magnetisierbaren Pigmente auf die Trommel und die Übertragung der Motivstruktur auf einen Bedruckstoff mit hohem Aufwand verbunden ist.

Außerdem offenbaren die genannten Druckschriften jeweils magnetische Druckverfahren, bei denen der Magnetzylinder elektrisch magnetisiert wird. Dies setzt einen hohen Aufwand an anzusteuernden Elektrospulen voraus, was mit einem hohen Steuerungsaufwand verbunden ist und außerdem dazu führt, dass nur relativ grobe Strukturen magnetisiert werden können.

Ebenso ist die Herstellung von Quasi-3D-Effekten beim Stand der Technik schwierig. Unter einem solchen Quasi-3D-Effekt wird verstanden, dass um die Motivelemente herum hellere Bereiche in der Pigmentierung entstehen, so dass damit ein räumlicher Eindruck vermittelt wird. Dies ist beim Stand der Technik nicht möglich, weil nur eine reine Übertragung von Magnetstrukturen auf einen Bedruckstoff mit magnetisierbaren Pigmenten gegeben ist.

Ebenso kann das Verfahren dazu dienen, die Leitfähigkeit eines Druckbildes in bestimmten Bereichen gezielt zu erhöhen bzw. zu reduzieren.

Der Erfindung liegt deshalb die Aufgabe zugrunde, ein magnetisches Druckverfahren und eine Vorrichtung zur Ausübung des Verfahrens nach dem Oberbegriff des Patentanspruches 1 so weiterzubilden, dass mit wesentlich geringerem Aufwand ein hochaufgelöstes magnetisches Druckbild passergenau auf einem Bedruckstoff aufgebracht werden kann.

Zur Lösung der gestellten Aufgabe ist die Erfindung durch das Verfahren nach dem unabhängigen Anspruch 1 gekennzeichnet.

Eine Vorrichtung zur Ausübung des Verfahrens ist Gegenstand des unabhängigen Anspruches 7

Wesentliches Merkmal der Erfindung ist, dass in einem ersten Verfahrensschritt auf einen beliebigen Bedruckstoff zunächst mit einem Auftragsverfahren, welches berührend oder berührungslos arbeiten kann, eine Magnetdruckfarbe aufgebracht wird, welche Magnetdruckfarbe auf dem Bedruckstoff haftet und nachfolgend in den Bereich einer Magnetisierungsstation gebracht wird, wo durch Eindringen von magnetischen Feldlinien, die in der Magnetdruckfarbe vorher regellos vorhandenen magnetisch ausrichtbaren Pigmente sich entsprechend den Feldlinien in der Magnetisierungsstation ausrichten und der das Druckbild tragende Bedruckstoff nachfolgend einer Fixierstation zugeführt wird, in der die Magnetdruckfarbe fixiert wird, so dass die im Magnetfeld ausgerichtete Stellung der magnetisch ausrichtbaren Pigmente fixiert ist.

Die Erfindung hat den Vorteil, dass in einem sehr frühen Verfahrensschritt der Bedruckstoff mit einer Magnetdruckfarbe beschichtet wird, wobei die Beschichtung in beliebiger Weise erfolgen kann. Es kann hierbei eine berührende Beschichtung erfolgen, wie z. B. durch ein Siebdruckverfahren, ein Rollenauftragsverfahren, z. B. im Hochdruck oder im Tiefdruck, Offsetdruck, ein Auftragsverfahren im Digitaldruck, ein Inkjet-Auftragsverfahren und andere berührende Auftragsverfahren, mit denen es möglich ist, eine Magnetdruckfarbe, die eine flüssige, pastöse oder pulverförmige Konsistenz haben kann, auf einem Bedruckstoff aufzutragen.

Andere Verfahren zur Auftragung der Magnetdruckfarbe, die flüssig, pastös oder pulverförmig sein kann, sind berührungslose Auftragsverfahren, wie z. B. Inkjet-Druckverfahren, Sprühauftragsverfahren, und elektrostatische Beschichtungsverfahren, bei denen im elektrostatischen Feld durch gegensätzliche Aufladung von Flächen eine Beschichtung des Bedruckstoffes mit einer aushärtbaren Magnetdruckfarbe erfolgen kann.

Es sollen also sämtliche berührenden und nicht berührenden Auftragsverfahren geschützt werden, mit denen es möglich ist, eine noch nicht ausgehärtete Magnetdruckfarbe, die aushärtbar ist und die entweder flüssig und/oder pastös und/oder pulverförmig ist, auf einen Bedruckstoff zu übertragen.

Der Bedruckstoff kann hierbei in verschiedenartiger Weise vorliegen.

In einer ersten Ausgestaltung kann es vorgesehen sein, dass der Bedruckstoff aus einem Folienband besteht, d. h. aus einer Kunststofffolie besteht. Diese besteht vorzugsweise aus PE, PP oder PET, kann aber auch aus jedem anderen geeigneten Kunststoff bestehen.

Statt eines solchen Bedruckstoffes können sämtliche anderen bekannten Bedruckstoffe gewählt werden, wie z.B. Papier, Baumwolle oder andere Zellstoffe oder Verbundmaterialien aus Kunststoff und Zellstoffen oder auch Holzfurnier, beliebige andere Trägermaterialien, weil es nur darauf ankommt, dass die nicht ausgehärtete Magnetdruckfarbe auf dem Bedruckstoff ein bestimmtes Farbfeld oder eine bestimmte Struktur ausfüllt. Der Bedruckstoff kann transparent, opak oder undurchsichtig sein und er kann eine Bedruckung oder ein Beschichtung in beliebiger Weise tragen.

Die Magnetdruckfarbe soll in einer derartigen Beschichtungsstärke aufgebracht werden, dass bei den weiteren Verarbeitungsschritten nicht die Gefahr besteht, dass die Magnetdruckfarbe von dem Bedruckstoff unbeabsichtigt abtropft oder verläuft.

In einer besonders bevorzugten Ausgestaltung ist es vorgesehen, dass die Magnetdruckfarbe ein Bindemittel enthält, welches UV-Härtbar ist, wobei im Bindemittel noch verschiedene andere Stoffe zur Verbesserung der Verarbeitbarkeit, der Aushärtbarkeit, der Flexibilität, der UV-Beständigkeit und dgl. vorgesehen sein können.

Derartige Stoffe können entweder Lösemittel sein, die durch Wärme ausgetrieben werden können, es können jedoch auch andere Fixierstoffe enthalten sein, die z.B. durch UV-Strahlung oder durch andere Strahlungsquellen ausgehärtet werden können. Solche anderen Strahlungsquellen können z. B. IR-Strahlungsquellen sein. Ebenso können aushärtbare 2-Komponenten Kunststoffe verwendet werden, deren Aushärtung durch einen zugesetzten Härter bestimmt wird.

Wichtig bei der erfindungsgemäßen Magnetdruckfarbe ist, dass im Bindemittel magnetisch ausrichtbare Pigmente enthalten sind, die eine derartige Beweglichkeit im Bindemittel haben, dass sie sich unter dem Einfluss magnetischer Feldlinien selbsttätig im Bindemittel ausrichten können, und zwar nach Richtung und Intensität der auf sie einwirkenden Feldlinien.

Solche magnetisch ausrichtbaren Pigmente sind in der einfachsten Ausführungsform z. B. Eisenpigmente. Sie können plättchenförmig, kugelförmig, späneförmig oder dergleichen vorgesehen sein. Ebenso geeignet sind Eisenoxidpigmente.

Die Pigmente müssen jedoch nicht aus einem magnetisierbaren Metallmaterial bestehen, sondern es können beliebige koerzitive-Stoffe sein, die in der Lage sind, sich im Bereich von magnetischen Feldlinien selbsttätig im Bindemittel auszurichten, um der Struktur, der Richtung und Intensität der magnetischen Feldlinien zu folgen.

Derartige magnetisch ausrichtbaren Pigmente müssen nicht notwendiger Weise auch im Magnetfeld magnetisierbar sein. Es reicht aus, wenn sie sich ausrichten, ohne dass sie selbst magnetische Eigenschaften annehmen. Hierunter fallen auch Eisencarbonyl-Pigmente.

Es können auch beliebige Pigmente aus anderen hochkoerzitiven Materialien verwendet werden, wie z. B. Eisenmangan-Kobalt-Legierungen und dergleichen mehr.

Ebenso ist es in der Erfindung vorgesehen, dass die Pigmente entweder in der ersten Ausführungsform ungefärbt sind und deshalb eine graue Farbe aufweisen.

In einer anderen Ausgestaltung können diese Pigmente jedoch auch eingefärbt sein und z. B. eine rote, blaue oder gelbe oder auch jede andere Farbe aufweisen.

Ebenso ist es möglich, im Bindemittel noch weitere Pigmente anzuordnen, die nicht notwendigerweise magnetisch ausrichtbar sind. Es kann sich hierbei um Iriodin-Pigmente oder andere Pigmente handeln, die eingefärbt oder farbig sein können und die nicht notwendigerweise sich an den Feldlinien orientieren und ausrichten.

Die Fließfähigkeit des Bindemittels soll so gewählt sein, dass nach dem Auftragen der Magnetdruckfarbe das Bindemittel eine gewisse Stabilisierung (Abtropffestigkeit) der Magnetdruckfarbe auf dem Bedruckstoff während der weiteren Verarbeitung gewährleistet. Gleichzeitig muss gewährleistet sein, dass die Pigmente bis zur Trocknung eine ausreichende Beweglichkeit besitzen, so dass sie sich im Magnetfeld ausrichten können.

Hierbei kann es - wie ausgeführt - entweder flüssig und/oder pastös und/oder pulverförmig oder als Mischung der oben genannten Zustände vorliegen.

Wichtig ist, dass nun eine auf den Bedruckstoff aufgebrachte Magnetdruckfarbe in den Bereich einer Magnetisierungsstation verbracht wird, wobei diese Magnetisierungsstation entweder als Rollenstation oder als Flachstation ausgebildet sein kann.

Unter dem Begriff "Rollenstation" wird verstanden, dass die magnetische Struktur auf einem rotierenden Magnetzylinder angeordnet ist, während unter dem Begriff "Flachstation" verstanden wird, dass die Magnetisierung im Bereich eines Flachbettes stattfindet.

Es wird in der folgenden Beschreibung davon ausgegangen, dass die Magnetisierung über jeweils eine Permanentmagnetschicht erfolgt, die entweder wahlweise auf dem Außenumfang des angetriebenen oder des mitlaufenden Magnetzylinders aufgebracht ist oder die auf dem Flachbett fixiert ist.

Die Verwendung einer Permanentmagnetschicht soll jedoch die vorliegende Erfindung nicht beschränken. Statt einer Permanentmagnetschicht können auch elektrisch magnetisierbare Schichten vorgesehen werden, so dass einzelne matrixartig (zeilen- und spaltenweise) angeordnete Elektrospulen in einer Schicht angeordnet sind, die gruppenweise oder einzeln angesteuert sein können.

Wichtig bei dem vorstehend beschriebenen Verfahren ist dem gemäß, dass eine sehr fein auflösende Magnetisierung in der Magnetschicht der Magnetisierungsstation vorgenommen werden kann, was insbesondere bei Verwendung einer Permanentmagnetschicht erfolgen kann.

Nur und ausschließlich aus Vereinfachungsgründen wird deshalb in der folgenden Beschreibung stets der Aufbau und die Zusammensetzung einer Permanentmagnetschicht beschrieben, obwohl die Erfindung nicht darauf beschränkt ist.

Bei der Verwendung einer Permanentmagnetschicht besteht nämlich der Vorteil, dass man sehr feinteilig und hochauflösend Strukturen aus der Oberfläche der Permanentmagnetschicht herausfräsen kann, um so Bereiche mit hoher Magnetfelddichte und Bereiche mit niedriger Magnetfelddichte zu schaffen.

Durch Bearbeitung der Oberfläche der Permanentmagnetschicht können deshalb sehr feinteilige Motivstrukturen in die Permanentmagnetschicht eingebracht werden.

Vorteilhaft ist die Bearbeitung der Oberfläche der Permanentschicht mit dem Ziel der Materialabtragung der Permanentschicht.

Ein solches Herausfräsen kann entweder durch eine spanabhebende Bearbeitung oder durch Laserstrahl oder durch eine Ätzung oder durch eine Kombination vorgenannter Abtragsverfahren erfolgen.

Eine solche Permanentmagnetschicht wird z. B. als axial magnetisierbare Folie von der Firma Rheinmagnet vertrieben. Ebenso können Magnetfolien anderer Hersteller, die eine geeignete Qualität besitzen, verwendet werden. Statt einer Axialmagnetisierung können auch andere Magnetisierungen vorgenommen werden.

(Die erfindungsgemäßen magnetisch ausrichtbaren Pigmente können z. B. als ferromagnetische Farbpigmente verwendet werden.)

In der einfachsten Ausgestaltung der vorliegenden Erfindung besteht die Magnetdruckfarbe aus einer Siebdruckfarbe, in der metallische Pigmente suspendiert sind, die geeignet sind, sich in den Feldlinien eines Permanentmagneten auszurichten.

Das erfindungsgemäße Verfahren zur magnetischen Ausrichtung von Pigmenten und der damit gefertigten Produkten hat kurz gefasst folgende Merkmale:
- Ausrichtung von gedruckten Pigmenten in unterschiedlicher Größe und Art
- Anwendung verschiedener Druckverfahren (z.B. BD, SD, TD, OD, FD, digitale Verfahren und andere Druckverfahren)
- magnetische Pigmente, auch in Verbindung mit weiteren magnetischen und nicht magnetischen Pigmenten oder anderen Druck- und Veredlungsverfahren (z.B. Lacke und andere Veredelungen)
- unterschiedliche Trocknungsverfahren möglich (z.B. UV, IR, Heißluft, LM, Elektronenstrahl, oxidative Trocknung und andre Trocknungsverfahren)
- erlaubt eine kostengünstige Fertigung

### Verfahren

- Erstellen einer geeigneten Druckfarbe (mit entsprechender Viskosität)
- beinhaltet alle Pigmente, welche magnetisch ausgerichtet werden können
- zur magnetischen Ausrichtung können unterschiedliche magnetische Werkstoffe und Verfahren eingesetzt werden (wie z. B. Dauermagnet, Hartmagnet, Elektromagnet, Magnetfolie und andere magnetische Werkstoffe und Verfahren)
- mit anschließender Trocknung

### Produkte

- Etiketten, Sleeves, Laminatfolien für Tuben und flexible Verpackungen aller Art
- Drucksachen aller Art (z. B. Papier, Karton, Bucheinband, Folien...)
- synthetische Verpackungen aller Art (z. B. Getränkeverpackungen, Verbundfolien, Kunststoff/Alu Verbindungen...)
- direkt bedruckte Produkte (z. B. Tuben, Flaschen, InkJet, Transferfolien...)
- magnetische Ausrichtung auf beiden bedruckbaren Seiten und Kombination mit weiteren beidseitig angewendeten Druck- und Veredelungsverfahren
- Verwendung dieses Verfahrens zur einwandfreien Identifikation von Produkten (z. B. Fälschungssicherheit).
- Gedruckte Elektronik

Um die Magnetkraft in der erfindungsgemäßen Permanentmagnetschicht zu verbessern, wird vorgeschlagen, eine anisotrope Magnetfolie zu verwenden.

Eine Vorrichtung zur Ausführung des Verfahrens besteht in einer ersten Ausgestaltung aus einem Farbauftragswerk oder einem Druckwerk, welches in beliebiger Weise einen Farbauftrag auf einen Bedruckstoff aufträgt, wobei die aufgetragene Farbe eine Magnetdruckfarbe ist, die zusammen mit dem Bedruckstoff in den Bereich einer Magnetisierstation gebracht wird, wo eine Ausrichtung der magnetisch ausrichtbaren Pigmente im Bereich des noch nicht ausgehärteten Bindemittels der Magnetdruckfarbe erfolgt und wobei dann nachfolgend eine Farbhärtung in einem Farbhärtungswerk stattfindet.

Eine solche Vorrichtung besteht bevorzugt aus einem Zylinder, dessen Außenumfang mit einer vorzugsweise gravierten Permanentmagnetschicht umgeben ist, über den der Bedruckstoff vorzugsweise mit seiner Unterseite läuft, während die Oberseite des Bedruckstoffes mit der noch nicht ausgehärteten Magnetdruckfarbe beschichtet ist. In einer anderen Ausführungsform kann der Zylinder auch über die Oberseite (Druckseite) des Bedruckstoffes laufen. Gegebenenfalls mit einem Spalt zwischen Zylinder und bedruckter Seite.

Hierbei ist es gleichgültig, ob die Magnetdruckfarbe auf der Oberfläche des Bedruckstoffes sitzt oder ob sie in die Struktur des Bedruckstoffes eindringt und dort einen entsprechenden Verbund eingeht, es muss nur stets sichergestellt sein, dass sich die magnetisch ausrichtbaren Pigmente in dem Bindemittel unter Einfluss der Feldlinien der Magnetfeldes ausrichten können.

Vorstehend wurde ausgeführt, dass die Veränderung der magnetischen Eigenschaften der Permanentmagnetschicht durch eine Bearbeitung der Oberfläche stattfindet. Eine solche Bearbeitung kann ein spanabhebendes Verfahren sein. Ebenso kann die Oberfläche geätzt oder mit einem Laserstrahl materialabtragend und/oder mit Veränderung der Oberflächenstruktur bearbeitet werden.

Darüber hinaus gibt es jedoch noch weitere Verfahren zur Veränderung der magnetischen Eigenschaften von Permanentschichten. So ist es möglich, mit einem die Motivstruktur tragenden Prägestempel die Oberfläche der Permanentschicht zu verdichten (prägen), um so gezielt an den die Motivstruktur tragenden Flächen der Permanentmagnetschicht eine Verdichtung herbei zu führen.

Die magnetischen Eigenschaften von Permanentmagnetschichten können auch durch gezielte Einwirkung von Wärme und Kälte verändert werden. Dies offenbart beispielsweise die DE 1 201 372 B. Auch diese Möglichkeit wird als erfindungswesentlich beansprucht. Demzufolge können beheizte und/oder gekühlte, die Motivstruktur tragende Stempel verwendet werden, die auf die Oberfläche der Permanentstruktur einwirken.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Seitenansicht einer ersten Ausführungsform eines Verfahrens, bei dem der Auftrag der Magnetdruckfarbe über ein Siebdruckwerk erfolgt
- Figur 2:: die Draufsicht auf die Anordnung nach Figur 1
- Figur 3:: schematisiert ausschnittsweise einen Bedruckstoff mit einer dort aufgebrachten Magnetdruckfarbe vor der Einbringung in ein Magnetfeld
- Figur 4:: der gleiche Zustand wie nach Figur 3 bei Einwirkung eines Magnetfeldes
- Figur 5:: der fertige Zustand des Druckbildes nach dem Fixieren
- Figur 6:: ein Schnitt durch eine erste Ausführungsform einer Permanentmagnetschicht
- Figur 7:: eine erste Ausführungsform der Ummantelung eines Magnetzylinders mit einer Permanentmagnetschicht nach Figur 6
- Figur 8:: eine zweite Ausführungsform eines Magnetzylinders
- Figur 9:: die Ausbildung des Magnetzylinders nach Figur 8 mit Hartmagneten vergrößert im Schnitt
- Figur 10:: die Draufsicht auf einen Magnetzylinder gemäß den Figuren 6 und 7
- Figur 11:: die räumliche Darstellung des Magnetzylinders nach Figur 10
- Figur 12 bis 15:: verschiedenartige Magnetdruckbilder in Kombination mit Farbdruckbildern und weiteren Gestaltungselementen
- Figur 16:: eine gegenüber Figur 1 abgewandelte Ausführungsform, bei der statt einer mit einem Zylinder arbeitenden Magnetisierungsstation eine mit einer Platte arbeitende Magnetisierungsstation gezeichnet ist

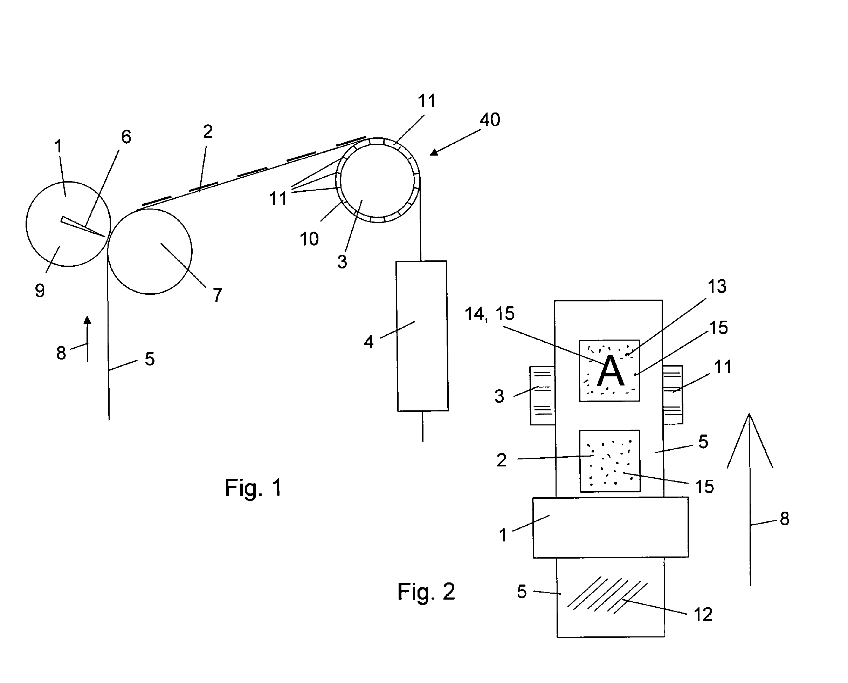

In Figuren 1 und 2 ist allgemein ein Druckwerk 1 mit einer Gegendruckrolle 7 dargestellt, welches als Siebdruckwerk ausgebildet ist und das mit einem Siebdruckrakel 6 arbeitet, welcher in einer Farbkammer 9 arbeitet, um die in der Farbkammer 9 angeordnete Magnetdruckfarbe 2 mit Hilfe des Siebdruckrakels 6 auf den in Pfeilrichtung 8 durch das Druckwerk 1 hindurch beförderten Bedruckstoff 5 aufzutragen.

Es ergeben sich somit abschnittsweise Auftragsbereiche der Magnetdruckfarbe gemäß Figur 1, zwischen denen Zwischenräume gebildet sein können. Es handelt sich um ein Trägerband mit einem Mehrfachnutzen, so dass dann später z. B. die einzelnen Magnetdruckfarben in Verbindung mit dem darunter liegenden Bedruckstoff ausgeschnitten oder gestanzt und als Etiketten verwendet werden können.

Selbstverständlich ist auch eine vollflächige Beschichtung des Bedruckstoffes 5 möglich, was jedoch in Figur 1 nicht dargestellt ist.

Der so mit Magnetdruckfarbe stellenweise beschichtete Bedruckstoff 5 wird in Pfeilrichtung 8 in den Bereich einer Magnetisierungsstation 40 gebracht, die im gezeigten Ausführungsbeispiel aus einem rotierenden Magnetzylinder 3 besteht.

Dieser Zylinder 3 ist an seinem Außenumfang mit einer Permanentmagnetschicht 10 umkleidet, in der erfindungsgemäß eine Motivstruktur 11 ausgebildet ist, die durch ein beliebiges Verfahren hergestellt wird, vorzugsweise durch ein Abtragsverfahren wie z.B. Fräsen, Prägen oder Ätzen.

In der Magnetisierungsstation 40 werden entsprechend der Motivstruktur 11 in der Permanentmagnetschicht 10 magnetische Feldlinien erzeugt, welche die Magnetdruckfarbe 2 durchsetzen.

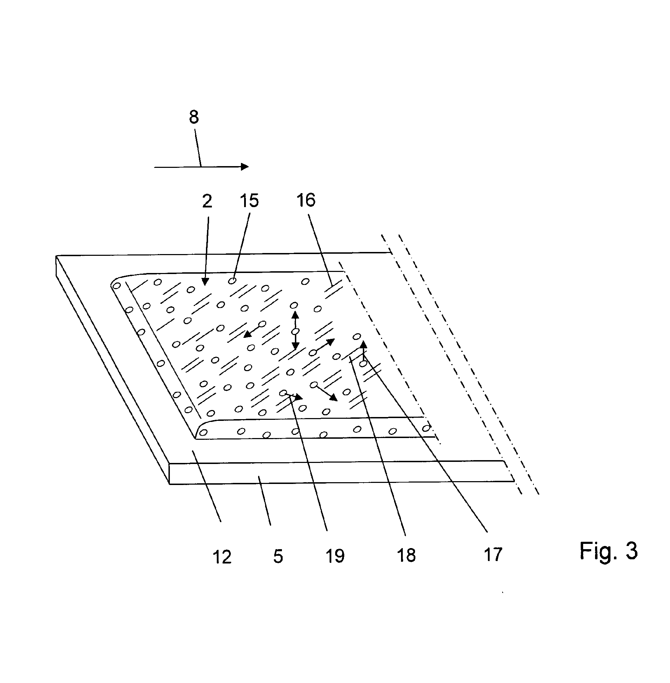

Erfindungsgemäß besteht die Magnetdruckfarbe 2 aus einem aushärtbaren Bindemittel 16 und darin frei suspendierten magnetisch ausrichtbaren Pigmenten 15, dies wird anhand der Figuren 3 bis 5 noch näher erläutert.

Gemäß Figur 2 sind die magnetisch ausrichtbaren Pigmente 15 zunächst in der Magnetdruckfarbe 2 regellos und unregelmäßig in der noch nicht ausgehärteten Magnetdruckfarbe 2 verteilt. Beim Durchlaufen der Magnetisierungsstation gemäß Figur 2 kommt es zu einer Ausrichtung der magnetisch ausrichtbaren Pigmente 15 im Magnetfeld, wodurch sich damit ein Druckmotiv 14 herausbildet, welches durch eine höhere Konzentration oder auch durch eine einheitliche räumliche Orientierung der magnetisch ausrichtbaren Pigmente, z. B. in Form eines Buchstabens A gebildet ist.

Nach der Anbringung des magnetisierten Druckmotivs 14 gemäß Figur 2 durchläuft die das Druckbild tragende Magnetdruckfarbe mit den magnetisch ausgerichteten Pigmenten einer Farbhärtung 4, die berührend oder berührungslos arbeiten kann.

In Figuren 3 bis 5 ist schematisiert vergrößert der Aufbau der Magnetdruckfarbe 2 auf einem Bedruckstoff 5 dargestellt, wobei der Bedruckstoff 5 als Trägerbahn ausgebildet ist. Die Magnetdruckfarbe 2 ist als flächiger Auftrag auf dem Bedruckstoff 5 aufgetragen, wobei erkennbar ist, dass die magnetisch ausrichtbaren Pigmente 15 im Bindemittel 16 frei in den Pfeilrichtungen 17, 18, 19 bewegbar sind und jederzeit sich unter Einwirkung von magnetischen Feldlinien orientieren, konzentrieren und ausrichten können. Sie können sich also an bestimmten Stellen entsprechend der Feldliniendichte innerhalb des Bindemittels 16 konzentrieren.

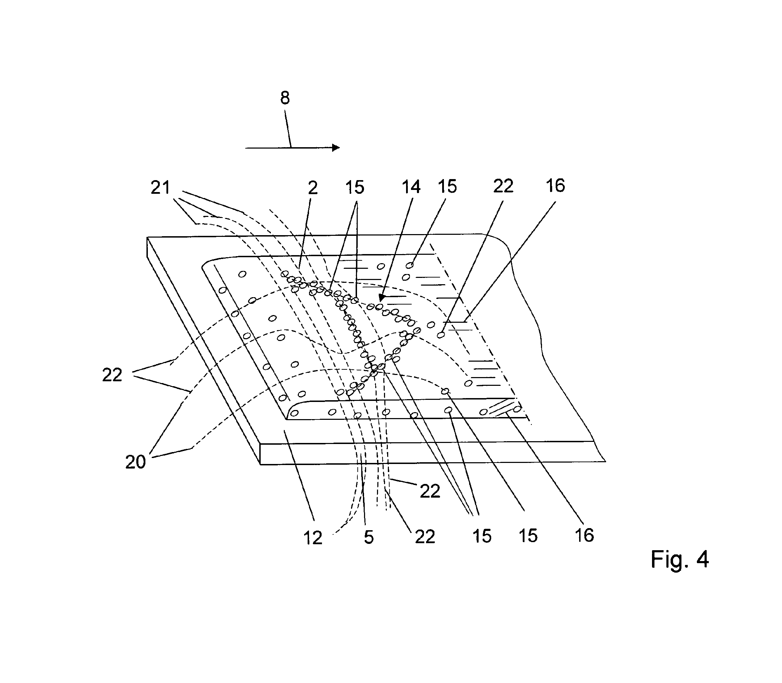

Dies zeigt die Figur 4. In Figur 4 ist gezeigt, dass entweder ein Längsmagnetfeld 20 und/oder ein Quermagnetfeld 21 vorhanden sein können und dass im Bereich dieser Magnetfeldlinien eine bestimmte Struktur, nämlich in Form einer Permanentmagnetstruktur 25 vorgesehen ist, so dass es zu einer Konzentration der Feldlinien 20, 21 im Bereich des gewünschten Druckmotivs 14 kommt, wobei das Druckmotiv 14 dem späteren Druckbild 13 entspricht.

Die Oberfläche des Bedruckstoffes 5 trägt also die Magnetdruckfarbe 2, wobei jedoch dies nicht lösungsnotwendig ist. Es kann auch vorgesehen sein, dass die Magnetdruckfarbe 2 in ihrem flüssigen, halbflüssigen, pastösen oder pulverförmigen Zustand auch - mindestens teilweise - in die Struktur des Bedruckstoffes 5 eingedrungen ist.

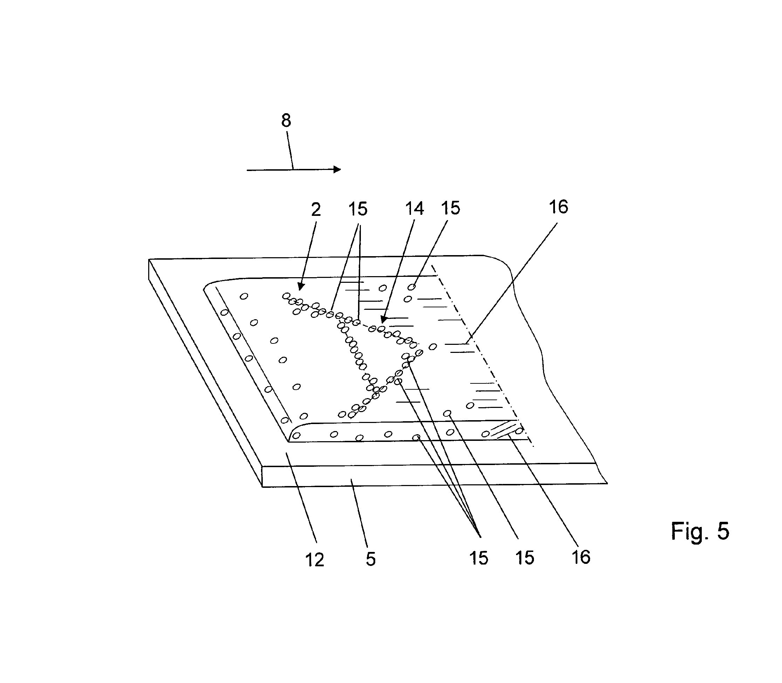

Wichtig ist, dass es im Bereich des Magnetfeldes, bestehend aus den einzelnen Feldlinien 20, 21, zu einer Konzentration der magnetisch ausrichtbaren Pigmente 15 entsprechend dem vorgegebenen Druckmotiv 14 kommt, wie es in Figur 5 dargestellt ist.

Das Druckmotiv bildet als Beispiel den Buchstaben A, wobei im Buchstabenbereich eine höhere Konzentration von magnetisch ausrichtbaren Pigmenten 15 vorliegt, als vergleichsweise im Umkreisbereich des Druckmotives 14, welches aus den Buchstaben A gebildet ist.

Insgesamt führen die Feldlinien 22 in der Permanentmagnetstruktur 25 zur Konzentration magnetisch ausrichtbarer Pigmente 15 in der Magnetdruckfarbe 2.

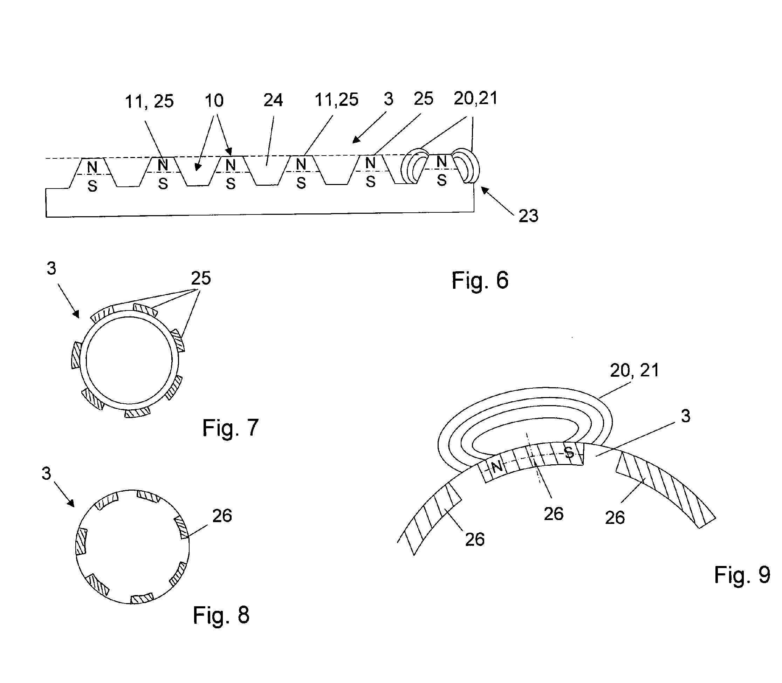

In den Figuren 6 bis 9 sind verschiedene Ausführungsformen gezeigt.

Im ersten Ausführungsbeispiel nach Figuren 6 und 7 ist die magnetische Folie 23 aus einem Permanentmagnetstruktur 25 gebildet, die dadurch gewonnen ist, dass aus der Oberseite der magnetischen Folie 23 Ausnehmungen 24 abgetragen sind, und zwar in der Weise, dass ein bestimmtes Druckmotiv 14 erstellt wird.

Hierbei sind die Nord- und Südpole senkrecht zur Oberfläche der magnetischen Folie 23 gerichtet und die sich hieraus ergebenden Feldlinien sind in Figur 6 beispielhaft dargestellt.

Der Magnetzylinder 3 wird deshalb mit der in Figur 6 dargestellten magnetischen Folie und der dort eingebrachten Permanentmagnetstruktur 25 am Außenumfang (mindestens teilweise) umkleidet und bildet so die Magnetisierstation 40.

In einem zweiten Ausführungsbeispiel nach den Figuren 8 und 9 ist statt der Verwendung einer magnetischen Folie 23 vorgesehen, dass einzelne Hartmagnete 26 in Form von Stäben, Platten oder dergleichen Elemente am Innenumfang des Magnetzylinders 3 angebracht sind und ein in Figur 9 dargestelltes Magnetfeld ausbilden. Hier sind die Nord-/Südpole parallel zur Oberfläche des Magnetzylinders 3 gerichtet.

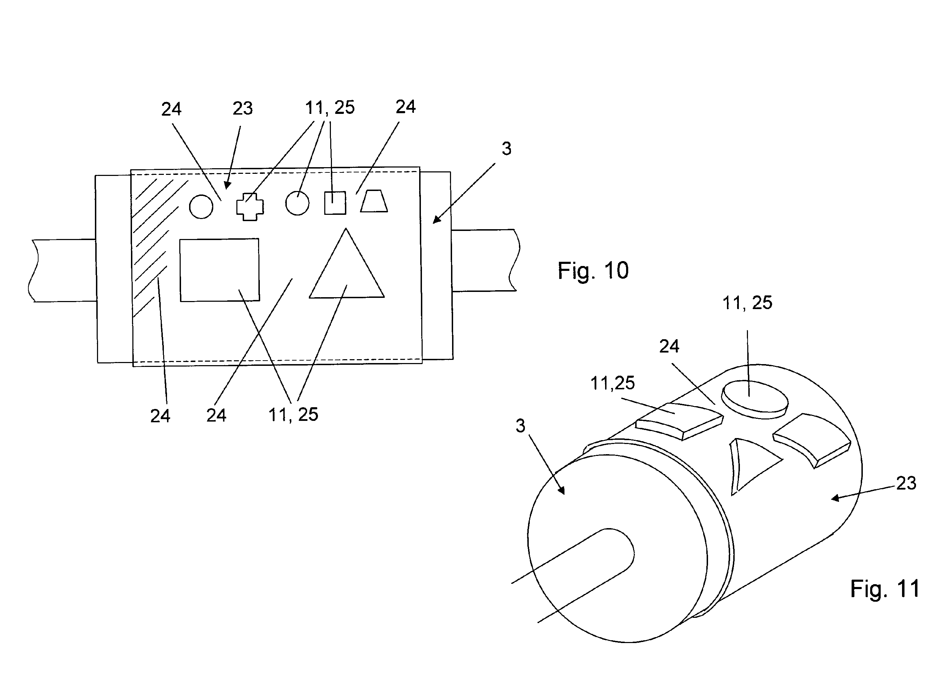

Die Figuren 10 und 11 zeigen die Oberfläche der Permanentmagnetstruktur 25, wobei unterschiedliche grafische Elemente durch Abtragung aus der Oberfläche ausgebildet sind. Dies wird durch Ausnehmungen 24 zwischen den grafischen Elementen (Motivstruktur 11) gekennzeichnet.

In Figur 11 ist räumlich dargestellt, dass durch die erhöht ausgebildete Motivstruktur in der Permanentmagnetstruktur eine Intensivierung der magnetischen Feldlinien im Bereich dieser grafischen Strukturen stattfindet, während im Bereich der Ausnehmungen eine stark abgeschwächte Feldlinienstruktur vorhanden ist.

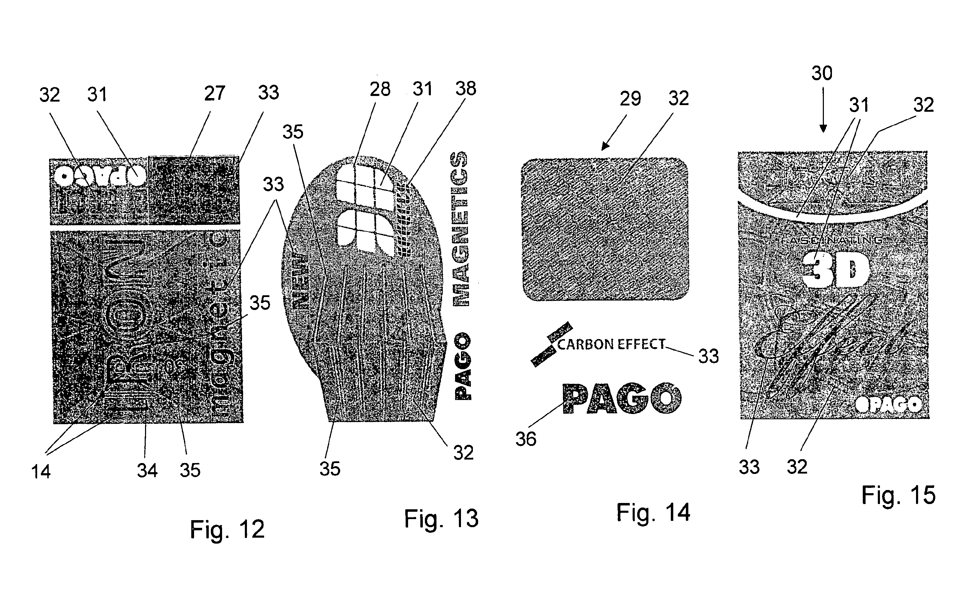

Die Figuren 12 bis 15 zeigen mit dem neuartigen magnetischen Druckverfahren hergestellte Druckbilder.

In Figur 12 ist ein erstes Druckbild 27 dargestellt, welches im Wesentlichen aus einer Durchsichtstruktur 31 besteht, die direkt durch den Bedruckstoff hindurch sehen lässt, so dass dieser Bereich nicht mit einer Magnetdruckfarbe beschichtet ist. Ferner zeigt das Druckbild 27 ein Magnetdruckbild 32 nach der Erfindung, wo aus der Oberfläche der magnetischen Folie 23 nun die Buchstabenfolge "effekt" herausgeschnitten wurde, und zwar im Umgebungsbereich.

Man sieht gleichzeitig anhand des weiteren Magnetdruckbildes 34, dass die so hergestellten grafischen Elemente alle an ihrer Außenumrandung einen helleren Saum aufweisen, der auch als Umrandung 35 bezeichnet ist, so dass ein 3D-Effekt erzielt wird, weil die grafischen Elemente in ihrem Randbereich mit einem helleren Saum 35 umrandet sind. Dies beruht darauf, dass im Randbereich eine geringere Konzentration der magnetisch ausrichtbaren Pigmente 15 vorliegt, als vergleichsweise in den anderen Umgebungsbereichen, so dass es zu einem simulierten 3D-Effekt kommt.

Die Figur 12 zeigt ferner, dass noch weitere Druckelemente vorhanden sein können, wie z. B. ein Farbdruckbild 33, welches mit einer lasierenden Farbe auf dem Bedruckstoff 5 aufgebracht ist und ferner ein deckendes Farbdruckbild 36, welches in Figur 14 als Beispiel angegeben ist.

Die Druckbilder 28, 29, 30, entsprechen den Figuren 13 bis 15, und die gleichen Erläuterungen gelten für die gleichen Teile, so dass auf diese Druckbilder nicht mehr eigens eingegangen zu werden braucht.

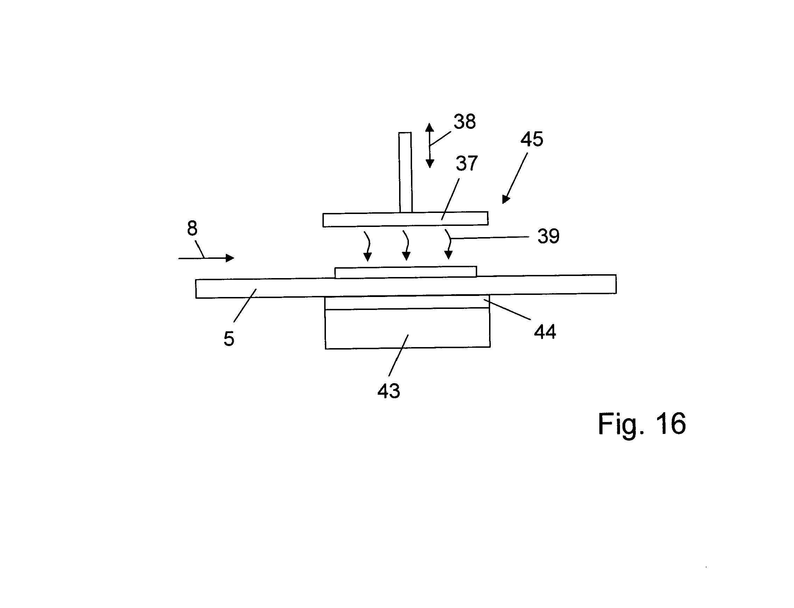

Die Figur 16 zeigt als weiteres Ausführungsbeispiel eine weitere Magnetisierungsstation 45 als Alternative zu der mit einem Zylinder arbeitenden Magnetisierungsstation 40. Dort ist erkennbar, dass die Magnetisierungsstation als Flachbett 43 ausgebildet ist, auf der eine Magnetplatte 44 angeordnet ist, die eine gleiche Permanentmagnetstruktur 25 trägt, wie anhand der vorstehenden Beispiele erläutert wurde.

Zur Aushärtung der aushärtbaren Farbe kann eine Farbhärtung 37 vorgesehen werden, die z. B. als eine Wärmestrahlung oder UV-Strahlung abgebende Platte ausgebildet ist, die in Pfeilrichtung 39 eine berührungslose Aushärtung der auf dem Bedruckstoff angeordneten Magnetdruckfarbe 2 ausführt.

Ebenso kann vorgesehen sein, dass die Farbhärtung 37 in Form der Platte noch in den Pfeilrichtungen 38 zu der Magnetdruckfarbe 2 zu- und wegstellbar ausgebildet ist.

Vorteil des erfindungsgemäßen Verfahrens ist ein passergenauer Auftrag und die Einbringung einer passergenauen Motivstruktur auf einen Bedruckstoff, ohne dass eine Übertragung eines vorgefertigten Druckbildes auf einen Bedruckstoff notwendig ist. Daher können sehr hohe Auflösungen bei sehr hoher Passergenauigkeit erreicht werden. Mit der Erfindung können aufgrund der vorstehend genannten Eigenschaften plastische Effekte erzielt werden, weil die magnetische Druckfarbe auch erhaben auf den Bedruckstoff aufgetragen werden kann und bei der Aushärtung die magnetisch ausrichtbaren Pigmente eine andere Oberflächenstruktur erbringen als vergleichsweise die im Nachbarbereich liegenden Teile des Bindemittels, so dass es zu einer erhabenen Oberflächenstruktur kommen kann.

Selbstverständlich ist es mit dem erfindungsgemäßen magnetischen Druckverfahren möglich, das Verfahren mit sämtlichen anderen bekannten farbgebenden Druckverfahren zu kombinieren, wie z. B. Hochdruck, Siebdruck, Inkjetdruck, Flexodruck, Tiefdruck, Rotationsdruck, Offsetdruck und dergleichen mehr.

Ebenso ist die Erfindung nicht darauf beschränkt, dass eine berührende Anlage des Bedruckstoffes an die Magnetisierstation stattfindet. Es kann auch in einem Luftspalt magnetisiert werden, so dass nicht vorausgesetzt ist, dass der Bedruckstoff die magnetisierbaren Strukturen der Magnetisierstation berührt.

Es kann also eine berührungslose Magnetisierung der magnetischen Druckfarbe stattfinden.

### Zeichnungslegende

- 1: Druckwerk
- 2: Magnetdruckfarbe
- 3: Magnetzylinder
- 4: Farbhärtung
- 5: Bedruckstoff
- 6: Siebdruckrakel
- 7: Gegenrolle
- 8: Pfeilrichtung
- 9: Farbkammer
- 10: Permanentmagnetschicht
- 11: Motivstruktur von 25
- 12: Oberfläche (von 5)
- 13: Druckbild
- 14: Druckmotiv
- 15: magnetisch ausrichtbare Pigmente
- 16: Bindemittel
- 17: Pfeilrichtung
- 18: Pfeilrichtung
- 19: Pfeilrichtung
- 20: Längsmagnetfeld
- 21: Quermagnetfeld
- 22: Feldlinie
- 23: magnetische Folie
- 24: Ausnehmung
- 25: Permanentmagnetstruktur
- 26: Hartmagnet
- 27: Druckbild
- 28: Druckbild
- 29: Druckbild
- 30: Druckbild
- 31: Durchsichtstruktur
- 32: Magnetdruckbild
- 33: Farbdruckbild (Lasur)
- 34: Magnetdruckbild
- 35: Umrandung
- 36: Farbdruckbild (deckend)
- 37: Farbhärtung
- 38: Pfeilrichtung
- 39: Pfeilrichtung
- 40: Magnetisierstation (Zylinder)
- 41 42 43: Flachbett
- 44: Magnetplatte
- 45: Magnetisierstation (Platte)

## Patentansprüche

1. Magnetisches Druckverfahren zur Bilderzeugung auf einem Bedruckstoff (5) mit einer Magnetdruckfarbe (2), die in einem Druckwerk (1) auf einem Magnetzylinder (3) aufgebracht ist und auf den Bedruckstoff (5) übertragen wird, dadurch g**ekennzeichnet, dass** in der Magnetdruckfarbe (2) im Magnetfeld ausrichtbare Pigmente (15) enthalten sind, welche sich in den, die Motivstruktur (11) abbildenden Feldlinien (22) eines Magnetfeldes (20, 21, 22, 25, 26, 32, 34, 44) ausrichten und danach (2) fixiert werden.

2. Verfahren nach Anspruch 1, **dadurch gekennzeichnet, dass** in einem ersten Verfahrensschritt die Magnetdruckfarbe (2) auf den Bedruckstoff (5) aufgebracht wird, dass in einem zweiten Verfahrensschritt die auf dem Bedruckstoff (5) haftende Magnetdruckfarbe (2) in den Bereich einer Magnetisierungsstation (40, 45) gebracht wird, in welcher durch Eindringen von magnetischen Feldlinien (22), die in der Magnetdruckfarbe (2) vorher regellos vorhandenen magnetisch ausrichtbaren Pigmente (15) sich entsprechend den Feldlinien (22) in der Magnetisierungsstation (40, 45) ausrichten oder konzentrieren und in einem dritten Verfahrensschritt der nun das Druckbild (13) tragende Bedruckstoff (5) nachfolgend einer Fixierstation (4) zugeführt wird, in der die Magnetdruckfarbe (2) fixiert wird, so dass die im Magnetfeld (20, 21, 22) ausgerichtete Stellung der magnetisch ausrichtbaren Pigmente (15) fixiert ist.

3. Verfahren nach Anspruch 1 oder 2, **dadurch gekennzeichnet, dass** die in dem ersten Verfahrensschritt auf den Bedruckstoff (5) aufgebrachte Magnetdruckfarbe (2) in einem berührenden oder berührungslosen Auftragsverfahren aufgebracht wird.

4. Verfahren nach einem der Ansprüche 1 bis 3, **dadurch gekennzeichnet, dass** in der Magnetdruckfarbe (2) ein Bindemittel (16) mit magnetisch ausrichtbaren Pigmente (15) enthalten ist, die eine derartige Beweglichkeit im Bindemittel (16) aufweisen, dass sie sich unter dem Einfluss magnetischer Feldlinien (20, 21, 22) selbsttätig im Bindemittel (16) ausrichten.

5. Verfahren nach einem der Ansprüche 1 bis 4, **dadurch gekennzeichnet, dass** die Druckvorlage (13, 27-30, 32) mit dem Druckmotiv (14) durch eine Abtragung der Permanentmagnetschicht (10) erfolgt.

6. Verfahren nach einem der Ansprüche 1 bis 5, **dadurch gekennzeichnet, dass** das Druckmotiv (14) auf der Druckvorlage (13) mit einer Laserbehandlung und/oder Wärme- und/oder Kältebehandlung und/oder Ätzung der Permanentmagnetschicht (10) und/oder durch eine Kombination eines oder mehrerer vorgenannten Verfahren erfolgt.

7. Vorrichtung zur Bilderzeugung auf einem Bedruckstoff (5) mit einer Magnetdruckfarbe (2), die in einem Druckwerk (1) aufgebracht ist und auf den Bedruckstoff (5) übertragen wird, **dadurch gekennzeichnet, dass** die Magnetisierung über jeweils eine Permanentmagnetschicht (25) erfolgt, die entweder wahlweise auf dem Außenumfang eines drehend angetriebenen oder eines passiv mitlaufenden Magnetzylinders (40) aufgebracht ist oder die auf einem Flachbett (43) fixiert ist.

8. Vorrichtung zur Bilderzeugung auf einem Bedruckstoff (5) mit einer Magnetdruckfarbe (2), die in einem Druckwerk (1) aufgebracht ist und auf den Bedruckstoff (5) übertragen wird, **dadurch gekennzeichnet, dass** die Magnetisierung über mindestens eine elektrisch magnetisierbare Schicht erfolgt, die entweder wahlweise auf dem Außenumfang eines drehend angetriebenen oder eines passiv mitlaufenden Magnetzylinders (40) aufgebracht ist oder die auf einem Flachbett (43) fixiert ist.

9. Vorrichtung nach einem oder mehreren der Ansprüche 1 bis 8, **dadurch gekennzeichnet, dass** die magnetisch ausrichtbaren Pigmente (15) als ferromagnetische Farbpigmente (15) ausgebildet sind.

10. Vorrichtung nach einem oder mehreren der Ansprüche 1 bis 9, **dadurch gekennzeichnet, dass** aus der Oberseite der magnetischen Folie (23) Ausnehmungen (24) entsprechend dem Druckmotiv (14) abgetragen sind. Weiterer Anspruch: Magnetpigmente sind eingefärbt. Es sind weitere (Farb- oder Effektpigmente in der Magnetdruckfarbe enthalten.
